# EUROPEAN PATENT APPLICATION

(11) **EP 4 772 489 A1**
(43) Date of publication of application: **08.07.2026**
(21) Application number: 24853136.0
(22) Date of filing: 05.02.2024
(51) Int. Cl.: C04B 35/26

(54) **FERRITE MAGNETIC TILE AND PREPARATION METHOD THEREFOR**

(30) Priority: 15.08.2023 CN 202311028861
(71) Applicant: Hengdian Group DMEGC Magnetics Co., Ltd., Jinhua, Zhejiang 322118 (CN)
(72) Inventor: YANG, Wuguo, Jinhua, Zhejiang 322118 (CN); SHENTU, Jinang, Jinhua, Zhejiang 322118 (CN); HE, Zhenyu, Jinhua, Zhejiang 322118 (CN); LI, Yuping, Jinhua, Zhejiang 322118 (CN); LU, Jianliang, Jinhua, Zhejiang 322118 (CN)
(74) Representative: HGF
(86) International application number: PCT/CN2024/075987
(87) International publication number: WO 2025/035719

(57) **Abstract**

Provided in the present invention are a ferrite magnetic tile and a preparation method therefor. The preparation method comprises: subjecting a mixed material of a ferrite magnetic powder and a binder to injection molding, and then sintering the resulting product to obtain a ferrite magnetic tile, wherein the sintering temperature is 1150-1240°C. The ultra-thin magnetic tile having a large radian obtained by means of the preparation method of the present application shows good magnetic performance: the central surface magnetic field intensity is 630-700 Gs, and the magnetic energy product can reach 4.5-5.2 MGOe, and same has a density of 4.8-5.2 g/cm³ and a compressive strength of 480-680 N, which are significantly higher than those of an existing injection-molded permanent magnet ferrite magnet. The ultra-thin magnetic tile having a large radian obtained by means of the preparation method of the present application has less internal dark cracks and basically does not need later grinding machining, thereby reducing the risk of stress damage generated during the machining process and also improving the finished product yield and utilization rate of the material: the finished product yield is not lower than 95%, and the material utilization rate is not lower than 90%, such that the production cost is reduced, and batch production requirements are satisfied.

## Description

### TECHNICAL FIELD

The present application relates to the technical field of permanent magnets, for example, a method for preparing a tile ferrite magnet, and, in particular, to a tile ferrite magnet and a preparation method therefor.

### BACKGROUND

A permanent magnet material is a material that can maintain constant magnetism once magnetized, also known as a hard magnetic material. Commonly used permanent magnetic materials include aluminum-nickel-cobalt permanent magnet alloys, ferrite permanent magnets, rare-earth permanent magnets, and various composite permanent magnetic materials. Permanent ferrite magnets are one of the fundamental functional materials for permanent magnet direct-current motors and are capable of meeting the operating requirements of motors in various environments. They exhibit high sensitivity and stability and can be widely used in various types of motors requiring high power, high rotational speed, and high torque, such as high-end automotive motors (ABS motors, starter motors, etc.), motorcycle starter motors, household appliances, and power tool motors. To facilitate fabrication of motor stators or rotors, permanent ferrite magnets used in motors are mostly shaped as tiles, referred to as tile magnets. The key dimension parameters for evaluating a permanent tile ferrite magnet include chord length, width, inner or outer radius, thickness, and the arc angle corresponding to the chord length.

Conventional permanent tile ferrite magnets are mainly prepared by a wet molding-magnetic field pressing process. The specific steps are as follows: coarse ferrite powder is milled by wet ball milling to an average particle size 1.0 µm or below and then subjected to concentration and dehydration to obtain a ferrite slurry with a solid content of about 65 wt% and good fluidity; the slurry is then pressed in a hydraulic press equipped with a tile-shaped mold under a magnetic field to obtain a ferrite blank; the ferrite blank is subsequently sintered at high temperature in a sintering furnace to obtain a semi-finished tile magnet; finally, grinding processes for inner/outer arcs, chord length, width, chamfers, etc., are performed using a grinding machine to produce a product that meets the dimension requirements of drawings. The wet molding process for preparing tile magnets has advantages such as high production efficiency, stable and reliable performance, and controllable dimension accuracy and thus has become the most mainstream method for producing permanent tile ferrite magnets. However, during the preparation of tile magnets, this process involves multiple grinding steps, large material removal, and relatively low material utilization. Moreover, repeated grinding can induce internal stress in the tile magnets, resulting in low mechanical strength of the tile magnets. The disadvantages of the conventional production process are particularly pronounced for large-arc ultra-thin tile magnets (with an arc angle of greater than 150° and a thickness of less than 2.0 mm), where the proportion of material removed by grinding is even larger, material utilization is even lower, defects such as chipping and cracking during grinding of tile magnets lead to lower yield, and the mechanical strength of the product becomes so low that the product is completely unusable.

The tile magnets may also be prepared by injection molding. The main process steps include: magnetic powder of a certain particle size and resin powder are kneaded and then granulated; the obtained granular material is then injected into an injection molding machine, heated and melted to obtain good fluidity; in this molten state, the granular material is injected into a tile-shaped metal mold with an orienting magnetic field, and after the granular material is cooled, a desired injection-molded tile-shaped ferrite device is obtained. The conventional injection-molded tile-shaped ferrite has the advantages of near net shape forming, no grinding required, high material utilization, and good mechanical strength and becomes particularly suitable for producing large-arc ultra-thin tile magnets. However, the magnetic properties of this process are low, with a maximum magnetic energy product not exceeding 2.5 MGOe, making it difficult to meet the requirements of relevant application scenarios.

CN102136332A discloses a flexible permanent ferrite magnet material for injection molding and a manufacturing method thereof, which belongs to the field of permanent ferrite magnet materials. The granule is compounded by the following components in percentage by mass: 80%-92% of permanent ferrite magnet, 3%-6% of rubber, 2.5%-10% of plasticizer and 0.1%-3% of accessory ingredient, where the permanent ferrite magnet adopts strontium ferrite Sr_{0.6}Fe₂O₃; the rubber includes main rubber and assistant rubber, where the main rubber accounts for 55%-95% of the total mass of the rubber. The strontium ferrite Sr_{0.6}Fe₂O₃ serves as the permanent ferrite magnet, and the permanent ferrite magnet, the rubber, the plasticizer and the accessory ingredient are compounded into a flexible permanent ferrite magnet material. This material can be prepared as flexible injection-molded granules, which can be injection-molded into a position sensor. The manufactured position sensor is a flexible sensor with good flexibility. Distinguished from a conventional rigid position sensor having poor flexibility, which is made of nylon injection-molded granules, the position sensor is more durable, convenient to use, and low-cost.

CN102351525A discloses a method for manufacturing a permanent ferrite magnet material powder for injection molding. The method includes the following process steps: first, raw materials consisting of iron oxide, A carbonate, a densifying agent, and a sintering aid are uniformly mixed, where A is one or a mixture of two of Sr, Ba, Pb and Ca; second, the mixed raw materials are fired by a dry process; then, the resulting fired material is finely ground; and finally, the ground material is subjected to heat treatment. The method for manufacturing a permanent ferrite magnet material powder for injection molding disclosed in this application does not require a molding step due to the addition of the densifying agent; instead, the mixed dry powder is directly fired. Moreover, after direct dry firing, the material can be directly washed and ground into a fine powder without the need for crushing and/or coarse grinding. The process is simple, and the resulting permanent ferrite magnet material powder has ideal grain morphology, good filling performance, and high and uniform magnetic force.

Currently, the disclosed tile ferrite magnets and the preparation methods therefor have certain drawbacks, making it difficult to effectively produce high-performance, large-arc, ultra-thin tile magnets. Therefore, the development and design of a new tile ferrite magnet and the preparation method therefor are of critical importance.

### SUMMARY

The following is a summary of subject matters described in detail herein. The summary is not intended to limit the scope of the claims.

The present application provides a tile ferrite magnet and a preparation method therefor. The ultra-thin tile magnet with a large arc angle prepared by the preparation method described in the present application exhibits excellent magnetic properties: the center surface magnetic field is 630-700 Gs, the magnetic energy product reaches 4.5-5.2 MGOe, the density is 4.8-5.2 g/cm³, and the anti-compressive strength is 480-680 N, which are significantly higher than those of existing injection-molded permanent ferrite magnets. Moreover, the ultra-thin tile magnet with a large arc angle prepared by the preparation method described in the present application has few microcracks and requires substantially no post-grinding processing, which not only reduces the risk of stress damage generated during processing but also improves the yield and material utilization: the yield is not less than 95%, and the material utilization is not less than 90%, thereby reducing production costs and meeting the requirements for mass production.

In a first aspect, the present application provides a method for preparing a tile ferrite magnet. The preparation method includes the following steps.

A mixed material of a ferrite magnetic powder and a binder is subjected to injection molding and sintered to obtain the tile ferrite magnet; and

The sintering is performed at a temperature of 1150-1240 °C.

The ultra-thin tile magnet with a large arc angle prepared by the preparation method described in the present application exhibits excellent magnetic properties: the center surface magnetic field is 630-700 Gs, the magnetic energy product reaches 4.5-5.2 MGOe, the density is 4.8-5.2 g/cm³, and the anti-compressive strength is 480-680 N, which are significantly higher than those of existing injection-molded permanent ferrite magnets. Moreover, the ultra-thin tile magnet with a large arc angle prepared by the preparation method has few microcracks and requires substantially no post-grinding processing, which not only reduces the risk of stress damage generated during processing but also improves the yield and material utilization: the yield is not less than 95%, and the material utilization is not less than 90%, thereby reducing production costs and meeting the requirements for mass production.

In the present application, the sintering is performed at a temperature of 1150-1240 °C, for example, but not limited to, 1150 °C, 1160 °C, 1170 °C, 1180 °C, 1190 °C, 1200 °C, 1210 °C, 1220 °C, 1230 °C or 1240 °C. Unlisted values within this range are also applicable.

In an embodiment, the mixed material further includes a surface modifier, a coupling agent, and a flow aid.

In the present application, the surface modifier is used to quickly remove fine magnetic powder and spheroidize angular magnetic particles, thereby improving the fluidity of magnetic powder.

In an embodiment, based on the mass of the mixed material being 100%, the mass fraction of the ferrite magnetic powder is 88.3-94.3 wt%, the mass fraction of the surface modifier is 0.1-0.9 wt%, the mass fraction of the coupling agent is 0.3-1.0 wt%, the mass fraction of the binder is 5-9 wt%, and the mass fraction of the flow aid is 0.3-0.8 wt%.

In the present application, based on the mass of the mixed material being 100%, the mass fraction of the ferrite magnetic powder is 88.3-94.3 wt%, for example, but not limited to, 88.3 wt%, 88.5 wt%, 89 wt%, 90 wt%, 91 wt%, 92 wt%, 93 wt%, 94 wt% or 94.3 wt%. Unlisted values within this range are also applicable.

In the present application, based on the mass of the mixed material being 100%, the mass fraction of the surface modifier is 0.1-0.9 wt%, for example, but not limited to, 0.1 wt%, 0.2 wt%, 0.3 wt%, 0.4 wt%, 0.5 wt%, 0.6 wt%, 0.7 wt%, 0.8 wt% or 0.9 wt%. Unlisted values within this range are also applicable.

In the present application, based on the mass of the mixed material being 100%, the mass fraction of the coupling agent is 0.3-1.0 wt%, for example, but not limited to, 0.3 wt%, 0.4 wt%, 0.5 wt%, 0.6 wt%, 0.7 wt%, 0.8 wt%, 0.9 wt% or 1 wt%. Unlisted values within this range are also applicable.

In the present application, based on the mass of the mixed material being 100%, the mass fraction of the binder is 5-9 wt%, for example, but not limited to, 5 wt%, 6 wt%, 7 wt%, 8 wt% or 9 wt%. Unlisted values within this range are also applicable.

In the present application, based on the mass of the mixed material being 100%, the mass fraction of the flow aid is 0.3-0.8 wt%, for example, but not limited to, 0.3 wt%, 0.4 wt%, 0.5 wt%, 0.6 wt%, 0.7 wt%, 0.8 wt% or 0.9 wt%. Unlisted values within this range are also applicable.

In an embodiment, the surface modifier includes any one or a combination of at least two of phosphoric acid, oxalic acid, acetic acid or citric acid. A typical but non-limiting combination may be a combination of phosphoric acid and oxalic acid, a combination of oxalic acid and acetic acid, a combination of acetic acid and citric acid, or a combination of phosphoric acid, oxalic acid and acetic acid.

In an embodiment, the surface modifier has a concentration of 10-20 wt%, for example, but not limited to, 10 wt%, 11 wt%, 12 wt%, 13 wt%, 14 wt%, 15 wt%, 16 wt%, 17 wt%, 18 wt%, 19 wt% or 20 wt%. Unlisted values within this range are also applicable.

In an embodiment, the coupling agent includes stearic acid and/or an ester derivative of stearic acid.

In an embodiment, the ester derivative of stearic acid includes butyl stearate and/or octyl stearate.

In an embodiment, the flow aid includes polyamide wax.

In an embodiment, the binder includes paraffin wax and/or microcrystalline wax, stearic acid wax, high-density polyethylene, and low-density polyethylene. The binder is used to ensure that the green body obtained by subsequent injection molding maintains a certain strength, thereby preventing deformation of the blank during sintering.

The paraffin wax described in the present application is a solid crystalline product extracted from petroleum, consisting of various hydrocarbons, primarily n-alkanes, as well as isoalkanes, cycloalkanes, and a small amount of aromatic hydrocarbons. The paraffin wax described in the present application includes, but is not limited to, Grade 60# paraffin wax; other non-enumerated paraffin waxes are also applicable.

The paraffin wax in the binder described in the present application serves two purposes: first, it acts as an organic binder to bind the ferrite magnetic powder; second, it is used to increase the fluidity of the ferrite magnetic powder. If the content of the paraffin wax in the binder is too low, the mixed material of the ferrite magnetic powder and the binder will have poor fluidity, and thereby cannot achieve normal injection molding. If the content of the paraffin wax in the binder is too high, the product will have excessively large pores after the paraffin wax is removed, thereby leading to poor strength. An excess of paraffin wax will also cause excessive volume change during sintering, thereby resulting in cracks.

In the present application, microcrystalline wax may be used in place of paraffin wax to achieve better product performance. Microcrystalline wax is also known as ceresin wax. The main components of the microcrystalline wax are cycloalkanes and aromatic hydrocarbons with relatively large molecular weights and long carbon chains. Under a microscope, the crystals of the microcrystalline wax are clearly much smaller than the crystals of the paraffin wax.

In an embodiment, based on the mass of the binder being 100%, the mass fraction of the paraffin wax and/or microcrystalline wax is 50-70 wt%, the mass fraction of the stearic acid wax is 10-20 wt%, the mass fraction of the high-density polyethylene is 10-15 wt%, and the mass fraction of the low-density polyethylene is 10-15 wt%.

In the present application, based on the mass of the binder being 100%, the mass fraction of the paraffin wax and/or microcrystalline wax is 50-70 wt%, for example, but not limited to, 50 wt%, 52 wt%, 54 wt%, 56 wt%, 58 wt%, 60 wt%, 62 wt%, 64 wt%, 66 wt%, 68 wt% or 70 wt%. Unlisted values within this range are also applicable.

In the present application, based on the mass of the binder being 100%, the mass fraction of the stearic acid wax is 10-20 wt%, for example, but not limited to, 10 wt%, 11 wt%, 12 wt%, 13 wt%, 14 wt%, 15 wt%, 16 wt%, 17 wt%, 18 wt%, 19 wt% or 20 wt%. Unlisted values within this range are also applicable.

In the present application, based on the mass of the binder being 100%, the mass fraction of the high-density polyethylene is 10-15 wt%, for example, but not limited to, 10 wt%, 11 wt%, 12 wt%, 13 wt%, 14 wt% or 15 wt%. Unlisted values within this range are also applicable.

In the present application, based on the mass of the binder being 100%, the mass fraction of the low-density polyethylene is 10-15 wt%, for example, but not limited to, 10 wt%, 11 wt%, 12 wt%, 13 wt%, 14 wt% or 15 wt%. Unlisted values within this range are also applicable.

In an embodiment, the mixed material is prepared by the following method: the fine ferrite magnetic powder, the surface modifier, the coupling agent, and the binder are mixed to obtain the mixed material.

In an embodiment, the mixing includes: the ferrite magnetic powder and the surface modifier are subjected to first heating and mixing to obtain a first mixed powder; the coupling agent is added, and second heating and mixing is performed to obtain a second mixed powder; and the flow aid and the binder are added, and third heating and mixing is performed to obtain the mixed material.

In an embodiment, the first heating and mixing includes: the ferrite magnetic powder is heated to 80-120 °C while stirring, the surface modifier is added, and the resulting mixture continues to be stirred for 5-15 min to obtain the first mixed powder.

In the present application, the end point temperature for the heating during the first heating and mixing is 80-120 °C, for example, but not limited to, 80 °C, 85 °C, 90 °C, 95 °C, 100 °C, 105 °C, 110 °C, 115 °C or 120 °C. Unlisted values within this range are also applicable.

In the present application, the stirring during the first heating and mixing is performed for 5-15 min, for example, but not limited to, 5 min, 6 min, 7 min, 8 min, 9 min, 10 min, 11 min, 12 min, 13 min, 14 min or 15 min. Unlisted values within this range are also applicable.

In an embodiment, the second heating and mixing includes: the first mixed powder is heated to 90-130 °C while stirring, the coupling agent is added, and the resulting mixture continues to be stirred for 20-40 min to obtain the second mixed powder.

In the present application, the end point temperature for the heating during the second heating and mixing is 90-130 °C, for example, but not limited to, 90 °C, 95 °C, 100 °C, 105 °C, 110 °C, 115 °C, 120 °C, 125 °C or 130 °C. Unlisted values within this range are also applicable.

In the present application, the stirring during the second heating and mixing is performed for 20-40 min, for example, but not limited to, 20 min, 22 min, 24 min, 26 min, 28 min, 30 min, 32 min, 34 min, 36 min, 38 min or 40 min. Unlisted values within this range are also applicable.

In an embodiment, the third heating and mixing includes: the temperature of the second mixed powder is adjusted to 80-100 °C, the flow aid and the binder are added, and the resulting mixture continues to be mixed for 20-40 min to obtain the mixed material.

In the present application, the temperature is adjusted to 80-100 °C during the third heating and mixing, for example, but not limited to, 80 °C, 82 °C, 84 °C, 86 °C, 88 °C, 90 °C, 92 °C, 94 °C, 96 °C, 98 °C or 100 °C. Unlisted values within this range are also applicable.

In the present application, the stirring during the third heating and mixing is performed for 20-40 min, for example, but not limited to, 20 min, 22 min, 24 min, 26 min, 28 min, 30 min, 32 min, 34 min, 36 min, 38 min or 40 min. Unlisted values within this range are also applicable.

In an embodiment, the first mixed powder has a moisture content of no more than 600 ppm, for example, but not limited to, 600 ppm, 550 ppm, 500 ppm, 450 ppm, 400 ppm, 350 ppm, 300 ppm, 250 ppm, 200 ppm, 150 ppm or 100 ppm. Unlisted values within this range are also applicable.

In an embodiment, the second mixed powder has a moisture content of no more than 900 ppm, for example, but not limited to, 900 ppm, 800 ppm, 700 ppm, 600 ppm, 500 ppm, 400 ppm, 300 ppm, 200 ppm or 100 ppm. Unlisted values within this range are also applicable.

In an embodiment, the ferrite magnetic powder is prepared by the following method: a permanent ferrite magnet coarse powder is mixed with an additive, and the resulting mixture is subjected to wet ball milling and dried to obtain a fine ferrite magnetic powder with an average particle diameter of 0.8-1.2 µm.

In an embodiment, the permanent ferrite magnet coarse powder has a chemical formula of A_{1-x-y}CaₓLa_{y}Fe_{2n-z}Co_{z}O₁₉, where A includes Sr or any one or a combination of at least two of Sr or Ba, 0.25 ≤ x ≤ 0.45, 0.35 ≤ y ≤ 0.55, 0.25 ≤ z ≤ 0.40, 0.6 ≤ z/y ≤ 0.9, and 5.1 ≤ n ≤ 5.6.

In the present application, x is greater than or equal to 0.25 and less than or equal to 0.45, for example, but not limited to, 0.25, 0.27, 0.3, 0.32, 0.35, 0.37, 0.4, 0.42 or 0.45. Unlisted values within this range are also applicable.

In the present application, y is greater than or equal to 0.35 and less than or equal to 0.55, for example, but not limited to, 0.35, 0.37, 0.4, 0.42, 0.45, 0.47, 0.5, 0.52 or 0.35. Unlisted values within this range are also applicable.

In the present application, z is greater than or equal to 0.25 and less than or equal to 0.40, for example, but not limited to, 0.25, 0.27, 0.3, 0.32, 0.35, 0.37 or 0.4. Unlisted values within this range are also applicable.

In the present application, z/y is greater than or equal to 0.6 and less than or equal to 0.9, for example, but not limited to, 0.6, 0.65, 0.7, 0.75, 0.8, 0.86 or 0.9. Unlisted values within this range are also applicable.

In the present application, n is greater than or equal to 5.1 and less than or equal to 5.6, for example, but not limited to, 5.1, 5.2, 5.3, 5.4, 5.5 or 5.6. Unlisted values within this range are also applicable.

In an embodiment, the additive includes SiO₂, CaCO₃ and H₃BO₃.

In an embodiment, the additive further includes Al₂O₃, Cr₂O₃, ZnO and SrCO₃.

In an embodiment, the additive has an average particle diameter of no more than 5 µm, for example, but not limited to, 5 µm, 4.5 µm, 3 µm, 2.5 µm, 2 µm, 1.5 µm or 1 µm. Unlisted values within this range are also applicable.

In an embodiment, based on the total mass of the permanent ferrite magnet coarse powder and the additive being 100%, the mass fraction of SiO₂ is 0.05-2.0 wt%, the mass fraction of CaCO₃ is 0.4-2.0 wt%, the mass fraction of Al₂O₃ is 0.1-2.0 wt%, the mass fraction of Cr₂O₃ is 0.1-1.5 wt%, the mass fraction of ZnO is 0.1-0.6 wt%, the mass fraction of SrCO₃ is 0.1-1.0 wt%, and the mass fraction of H₃BO₃ is 0.1-0.8 wt%.

In the present application, based on the total mass of the permanent ferrite magnet coarse powder and the additive being 100%, the mass fraction of SiO₂ is 0.05-2.0 wt%, for example, but not limited to, 0.05 wt%, 0.07 wt%, 0.1 wt%, 0.2 wt%, 0.3 wt%, 0.5 wt%, 0.7 wt%, 1 wt%, 1.2 wt%, 1.5 wt%, 1.7 wt% or 2 wt%. Unlisted values within this range are also applicable.

In the present application, based on the total mass of the permanent ferrite magnet coarse powder and the additive being 100%, the mass fraction of CaCO₃ is 0.4-2.0 wt%, for example, but not limited to, 0.4 wt%, 0.6 wt%, 0.8 wt%, 1 wt%, 1.2 wt%, 1.4 wt%, 1.6 wt%, 1.8 wt% or 2 wt%. Unlisted values within this range are also applicable.

In the present application, based on the total mass of the permanent ferrite magnet coarse powder and the additive being 100%, the mass fraction of Al₂O₃ is 0.1-2.0 wt%, for example, but not limited to, 0.1 wt%, 0.2 wt%, 0.5 wt%, 0.7 wt%, 1 wt%, 1.2 wt%, 1.5 wt%, 1.7 wt% or 2 wt%. Unlisted values within this range are also applicable.

In the present application, based on the total mass of the permanent ferrite magnet coarse powder and the additive being 100%, the mass fraction of Cr₂O₃ is 0.1-1.5 wt%, for example, but not limited to, 0.1 wt%, 0.3 wt%, 0.5 wt%, 0.7 wt%, 1 wt%, 1.2 wt% or 1.5 wt%. Unlisted values within this range are also applicable.

In the present application, based on the total mass of the permanent ferrite magnet coarse powder and the additive being 100%, the mass fraction of ZnO is 0.1-0.6 wt%, for example, but not limited to, 0.1 wt%, 0.2 wt%, 0.3 wt%, 0.4 wt%, 0.5 wt% or 0.6 wt%. Unlisted values within this range are also applicable.

In the present application, based on the total mass of the permanent ferrite magnet coarse powder and the additive being 100%, the mass fraction of SrCO₃ is 0.1-1.0 wt%, for example, but not limited to, 0.1 wt%, 0.3 wt%, 0.5 wt%, 0.7 wt% or 1 wt%. Unlisted values within this range are also applicable.

In the present application, based on the total mass of the permanent ferrite magnet coarse powder and the additive being 100%, the mass fraction of H₃BO₃ is 0.1-0.8 wt%, for example, but not limited to, 0.1 wt%, 0.2 wt%, 0.3 wt%, 0.4 wt%, 0.5 wt%, 0.6 wt%, 0.7 wt% or 0.8 wt%. Unlisted values within this range are also applicable.

In an embodiment, the preparation method further includes: kneading and granulation are sequentially performed before the injection molding.

In an embodiment, the kneading is performed at a temperature of 100-150 °C for 1-3 h.

In the present application, the kneading is performed at a temperature of 100-150 °C, for example, but not limited to, 100 °C, 110 °C, 120 °C, 130 °C, 140 °C or 150 °C. Unlisted values within this range are also applicable.

In the present application, the kneading is performed for 1-3 h, for example, but not limited to, 1 h, 1.2 h, 1.4 h, 1.6 h, 1.8 h, 2 h, 2.4 h, 2.6 h, 2.8 h or 3 h. Unlisted values within this range are also applicable.

In an embodiment, the mixed material obtained after the granulation has an average particle diameter of 6-8 mm, for example, but not limited to, 6 mm, 6.2 mm, 6.4 mm, 6.6 mm, 6.8 mm, 7 mm, 7.2 mm, 7.4 mm, 7.6 mm, 7.8 mm or 8 mm. Unlisted values within this range are also applicable.

In an embodiment, the injection molding is performed at a temperature of 100-150 °C, for example, but not limited to, 100 °C, 110 °C, 120 °C, 130 °C, 140 °C or 150 °C. Unlisted values within this range are also applicable.

In an embodiment, the injection molding is performed under a pressure of 75-200 bar, for example, but not limited to, 75 bar, 80 bar, 90 bar, 100 bar, 110 bar, 120 bar, 130 bar, 140 bar, 150 bar, 160 bar, 170 bar, 180 bar, 190 bar or 200 bar. Unlisted values within this range are also applicable.

In an embodiment, the injection molding is performed in a tile-shaped molding cavity equipped with a magnetic field.

In an embodiment, natural cooling is further performed between the injection molding and the sintering.

In an embodiment, the preparation method further includes debinding performed between the injection molding and the sintering.

In an embodiment, the debinding includes solvent debinding and thermal debinding sequentially performed.

In an embodiment, the solvent debinding includes: a green body obtained by injection molding is immersed in kerosene.

In the present application, most of the paraffin wax is first removed by prolonged immersion in kerosene, which prevents excessively large or uneven pores caused by wax volatilization during sintering, thereby improving the strength of the product. The resulting product exhibits uniform porosity and high compactness, and the debound green body has a high density.

During the thermal debinding step of the present application, by adopting a slow heating procedure from low temperature, the organic binders other than the paraffin wax are melt slowly and gradually exude to the surface of the green body obtained by injection molding, which avoids the formation of numerous irregular pores due to the gasification of these organic substances during subsequent sintering, thereby improving the strength of the final product and ensuring the compactness of the product. As a result, a high-density tile ferrite magnet is ultimately obtained.

In an embodiment, the immersing is performed at a temperature of 40-60 °C for 5-8 h.

In the present application, the immersing is performed at a temperature of 40-60 °C, for example, but not limited to, 40 °C, 42 °C, 44 °C, 46 °C, 48 °C, 50 °C, 52 °C, 54 °C, 56 °C, 58 °C or 60 °C. Unlisted values within this range are also applicable.

In the present application, the immersing is performed for 5-8 h, for example, but not limited to, 5 h, 5.5 h, 6 h, 6.5 h, 7 h, 7.5 h or 8 h. Unlisted values within this range are also applicable.

In an embodiment, the thermal debinding includes heating and temperature holding sequentially performed.

In an embodiment, the heating is performed at a heating rate of 10-15 °C/min, and the end point temperature for the heating is 400-800 °C.

In the present application, the heating is performed at a heating rate of 10-15 °C/min, for example, but not limited to, 10 °C/min, 11 °C/min, 12 °C/min, 13 °C/min, 14 °C/min or 15 °C/min. Unlisted values within this range are also applicable.

In the present application, the end point temperature for the heating is 400-800 °C, for example, but not limited to, 400 °C, 500 °C, 600 °C, 700 °C or 800 °C. Unlisted values within this range are also applicable.

In an embodiment, the temperature holding is performed for 4-6 h, for example, but not limited to, 4 h, 4.2 h, 4.4 h, 4.6 h, 4.8 h, 5 h, 5.2 h, 5.4 h, 5.6 h, 5.8 h or 6 h. Unlisted values within this range are also applicable.

In an embodiment, the sintering is performed for 2-6 h, for example, but not limited to, 2 h, 2.5 h, 3 h, 3.5 h, 4 h, 4.5 h, 5 h, 5.5 h or 6 h. Unlisted values within this range are also applicable.

The sintering is performed in an air atmosphere.

As an optional technical solution of the preparation method of the present application, the preparation method includes the following steps.
(1) A permanent ferrite magnet coarse powder having an average particle diameter of 4-6 µm is mixed with an additive with an average particle diameter of no more than 5 µm, and the resulting mixture is subjected to wet ball milling and dried to obtain the ferrite magnetic powder with an average particle diameter of 0.8-1.2 µm.

The permanent ferrite magnet coarse powder has a chemical formula of A_{1-x-y}CaₓLa_{y}Fe_{2n-z}Co_{z}O₁₉, where A includes Sr or any one or a combination of at least two of Sr or Ba, 0.25 ≤ x ≤ 0.45, 0.35 ≤ y ≤ 0.55, 0.25 ≤ z ≤ 0.40, 0.6 ≤ z/y ≤ 0.9, and 5.1 ≤ n ≤ 5.6.

Based on the total mass of the permanent ferrite magnet coarse powder and the additive being 100%, the mass fraction of SiO₂ is 0.05-2.0 wt%, the mass fraction of CaCO₃ is 0.4-2.0 wt%, the mass fraction of Al₂O₃ is 0-2.0 wt%, the mass fraction of Cr₂O₃ is 0-1.5 wt%, the mass fraction of ZnO is 0-0.6 wt%, the mass fraction of SrCO₃ is 0.1-1.0 wt%, and the mass fraction of H₃BO₃ is 0-0.8 wt%.

(2) The ferrite magnetic powder obtained in step (1) is heated to 80-120 °C while stirring, a surface modifier is added, and the resulting mixture continues to be stirred for 5-15 min to obtain a first mixed powder; the first mixed powder is heated to 90-130 °C while stirring, a coupling agent is added, and the resulting mixture continues to be stirred for 20-40 min to obtain a second mixed powder; the temperature of the second mixed powder is adjusted to 80-100 °C, a flow aid and a binder are added, and the resulting mixture continues to be mixed for 20-40 min to obtain a final mixed material.

Based on the mass of the mixed material being 100%, the mass fraction of the ferrite magnetic powder is 88.3-94.3 wt%, the mass fraction of the surface modifier is 0.1-0.9 wt%, the mass fraction of the coupling agent is 0.3-1.0 wt%, the mass fraction of the binder is 5-9 wt%, and the mass fraction of the flow aid is 0.3-0.8 wt%.

Based on the mass of the binder being 100%, the mass fraction of paraffin wax and/or microcrystalline wax is 50-70 wt%, the mass fraction of stearic acid wax is 10-20 wt%, the mass fraction of high-density polyethylene is 10-15 wt%, and the mass fraction of low-density polyethylene is 10-15 wt%.

(3) The mixed material obtained in step (2) is kneaded at 100-150 °C for 1-3 h and granulated to obtain a permanent ferrite magnet granular material with an average particle diameter of 6-8 mm.

(4) The permanent ferrite magnet granular material obtained in step (3) is subjected to injection molding in a tile-shaped molding cavity at a temperature of 100-150 °C and under a pressure of 75-200 bar and naturally cooled to obtain a green body.

(5) The green body obtained in step (4) is subjected to solvent debinding by immersing the green body in kerosene at a temperature of 40-60 °C for 5-8 h and subjected to thermal debinding by heating the green body at a rate of 10-15 °C/min to a temperature of 400-800 °C and holding the green body at the temperature for 4-6 h to obtain a debound green body.

(6) The debound green body obtained in step (5) is sintered in an air atmosphere at a temperature of 1150-1240 °C for 2-6 h to obtain the tile ferrite magnet.

In a second aspect, the present application provides a tile ferrite magnet. The tile ferrite magnet is prepared by the preparation method described in the first aspect.

In an embodiment, the tile ferrite magnet has an arc angle greater than 150° and a thickness not greater than 2.0 mm.

In the present application, the arc angle of the tile ferrite magnet is greater than 150°, for example, but not limited to, 151°, 155°, 156°, 157°, 158°, 159°, 160°, 161°, 162°, 163°, 164°, 165°, 167°, 168°, 170°, 172° or 175°. Unlisted values within this range are also applicable.

In the present application, the thickness of the tile ferrite magnet is not greater than 2.0 mm, for example, but not limited to, 2.0 mm, 1.9 mm, 1.8 mm, 1.6 mm, 1.4 mm, 1.2 mm or 1.0 mm. Unlisted values within this range are also applicable.

In an embodiment, the tile ferrite magnet has a magnetic energy product of 4.5-5.2 MGOe, for example, but not limited to, 4.5 MGOe, 4.6 MGOe, 4.7 MGOe, 4.8 MGOe, 4.9 MGOe, 5 MGOe, 5.1 MGOe or 5.2 MGOe. Unlisted values within this range are also applicable.

Compared with the related art, the present application has the following beneficial effects.

The ultra-thin tile magnet with a large arc angle prepared by the preparation method described in the present application exhibits excellent magnetic properties: the center surface magnetic field is 630-700 Gs, the magnetic energy product reaches 4.5-5.2 MGOe, the density is 4.8-5.2 g/cm³, and the anti-compressive strength is 480-680 N, which are significantly higher than those of existing injection-molded permanent ferrite magnets. Moreover, the ultra-thin tile magnet with a large arc angle prepared by the preparation method described in the present application has few microcracks and requires substantially no post-grinding processing, which not only reduces the risk of stress damage generated during processing but also improves the yield and material utilization: the yield is not less than 95%, and the material utilization is not less than 90%, thereby reducing production costs and meeting the requirements for mass production.

Other aspects can be understood after the drawings and the detailed description are read and understood.

### BRIEF DESCRIPTION OF DRAWINGS

The drawings are intended to facilitate a further understanding of the technical solutions described herein and constitute part of the specification. The drawings, together with the embodiments of the present application, are used to explain the technical solutions herein and shall not be construed as limiting the technical solutions herein.

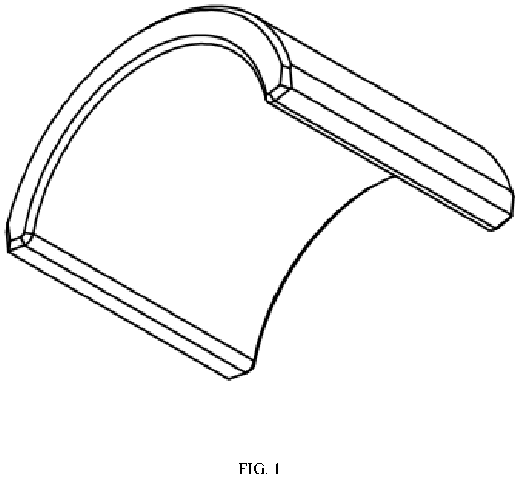

FIG. 1 is a diagram illustrating the structure of a tile ferrite magnet prepared by Example 1 of the present application.

### DETAILED DESCRIPTION

Technical solutions of the present application are further described below through specific examples. It is to be understood by those skilled in the art that the examples are only intended to facilitate understanding of the present application and are not to be construed as limiting the present application.

### Example 1

The present application provides a method for preparing a tile ferrite magnet shown in FIG. 1. The preparation method includes the following steps.
(1) A permanent ferrite magnet coarse powder with an average particle diameter of 5 µm was mixed with an additive with an average particle diameter of 3 µm, and the resulting mixture was subjected to wet ball milling and dried to obtain a ferrite magnetic powder with an average particle diameter of 0.9 µm.

The permanent ferrite magnet coarse powder had a chemical formula of Sr_{0.25}Ca_{0.3}La_{0.45}Fe_{11.3}Co_{0.32}O₁₉. The additive included SiO₂, CaCO₃ and H₃BO₃. Based on the total mass of the permanent ferrite magnet coarse powder and the additive being 100%, the mass fraction of SiO₂ was 0.5 wt%, the mass fraction of CaCO₃ was 1.5 wt%, and the mass fraction of H₃BO₃ was 0.4 wt%.

(2) The ferrite magnetic powder obtained in step (1) was heated to 85 °C while stirring, phosphoric acid with a concentration of 15% was added, and the resulting mixture continued to be stirred for 10 min to obtain a first mixed powder; the first mixed powder was heated to 100 °C while stirring, stearic acid was added, and the resulting mixture continued to be stirred for 30 min to obtain a second mixed powder; the temperature of the second mixed powder was adjusted to 90 °C, polyamide wax and a binder were added, and the resulting mixture continued to be mixed for 20 min to obtain a final mixed material.

Based on the mass of the mixed material being 100%, the mass fraction of the ferrite magnetic powder was 93 wt%, the mass fraction of the phosphoric acid with a concentration of 15% was 0.5 wt%, the mass fraction of the stearic acid was 0.5 wt%, the mass fraction of the binder was 5.6 wt%, and the mass fraction of the polyamide wax was 0.4 wt%.

Based on the mass of the binder being 100%, in the binder, the mass fraction of paraffin wax was 60 wt%, the mass fraction of stearic acid wax was 10 wt%, the mass fraction of high-density polyethylene was 15 wt%, and the mass fraction of low-density polyethylene was 15 wt%.

(3) The mixed material obtained in step (2) was kneaded at 120 °C for 2 h and granulated to obtain a permanent ferrite magnet granular material with an average particle diameter of 7 mm.

(4) The permanent ferrite magnet granular material obtained in step (3) was subjected to injection molding in a tile-shaped molding cavity at a temperature of 140 °C and under a pressure of 180 bar and naturally cooled to obtain a green body.

(5) The green body obtained in step (4) was subjected to solvent debinding by immersing the green body in kerosene at a temperature of 50 °C for 8 h and subjected to thermal debinding by heating the green body at a rate of 12 °C/min to 700 °C and holding the green body at 700 °C for 6 h to obtain a debound green body.

(6) The debound green body obtained in step (5) was sintered in an air atmosphere at a temperature of 1240 °C for 5 h to obtain the tile ferrite magnet.

### Example 2

The present application provides a method for preparing a tile ferrite magnet. The preparation method includes the following steps.
(1) A permanent ferrite magnet coarse powder having an average particle diameter of 4 µm was mixed with an additive with an average particle diameter of 2 µm, and the resulting mixture was subjected to wet ball milling and dried to obtain a ferrite magnetic powder with an average particle diameter of 0.8 µm.

The permanent ferrite magnet coarse powder had a chemical formula of Sr_{0.20}Ca_{0.28}La_{0.52}Fe_{11.4}Co_{0.30}O₁₉. The additive included SiO₂, CaCO₃, H₃BO₃, ZnO and Al₂O₃. Based on the total mass of the permanent ferrite magnet coarse powder and the additive being 100%, the mass fraction of SiO₂ was 0.6 wt%, the mass fraction of CaCO₃ was 1.3 wt%, the mass fraction of H₃BO₃ was 0.3 wt%, the mass fraction of ZnO was 0.2 wt%, and the mass fraction of Al₂O₃ was 0.4 wt%.

(2) The ferrite magnetic powder obtained in step (1) was heated to 85 °C while stirring, citric acid with a concentration of 15% was added, and the resulting mixture continued to be stirred for 10 min to obtain a first mixed powder; the first mixed powder was heated to 100 °C while stirring, butyl stearate was added, and the resulting mixture continued to be stirred for 30 min to obtain a second mixed powder; the temperature of the second mixed powder was adjusted to 90 °C, polyamide wax and a binder were added, and the resulting mixture continued to be mixed for 20 min to obtain a final mixed material.

Based on the mass of the mixed material being 100%, the mass fraction of the ferrite magnetic powder was 91 wt%, the mass fraction of the citric acid with a concentration of 15% was 0.8 wt%, the mass fraction of the butyl stearate was 0.4 wt%, the mass fraction of the binder was 7.3 wt%, and the mass fraction of the polyamide wax was 0.5 wt%.

Based on the mass of the binder being 100%, in the binder, the mass fraction of paraffin wax was 60 wt%, the mass fraction of stearic acid wax was 15 wt%, the mass fraction of high-density polyethylene was 10 wt%, and the mass fraction of low-density polyethylene was 10 wt%.

(3) The mixed material obtained in step (2) was kneaded at 120 °C for 2 h and granulated to obtain a permanent ferrite magnet granular material with an average particle diameter of 7 mm.

(4) The permanent ferrite magnet granular material obtained in step (3) was subjected to injection molding in a tile-shaped molding cavity at a temperature of 140 °C and under a pressure of 180 bar and naturally cooled to obtain a green body.

(5) The green body obtained in step (4) was subjected to solvent debinding by immersing the green body in kerosene at a temperature of 50 °C for 8 h and subjected to thermal debinding by heating the green body at a rate of 12 °C/min to 800 °C and holding the green body at 800 °C for 6 h to obtain a debound green body.

(6) The debound green body obtained in step (5) was sintered in an air atmosphere at a temperature of 1240 °C for 6 h to obtain the tile ferrite magnet.

### Example 3

The present application provides a method for preparing a tile ferrite magnet. The preparation method includes the following steps.
(1) A permanent ferrite magnet coarse powder with an average particle diameter of 6 µm was mixed with an additive with an average particle diameter of 5 µm, and the resulting mixture was subjected to wet ball milling and dried to obtain a ferrite magnetic powder with an average particle diameter of 1.2 µm.

The permanent ferrite magnet coarse powder had a chemical formula of Sr_{0.15}Ca_{0.35}La_{0.50}Fe_{11.4}Co_{0.26}O₁₉. The additive included SiO₂, CaCO₃, H₃BO₃ and Cr₂O₃. Based on the total mass of the permanent ferrite magnet coarse powder and the additive being 100%, the mass fraction of SiO₂ was 0.4 wt%, the mass fraction of CaCO₃ was 1.8 wt%, the mass fraction of H₃BO₃ was 0.2 wt%, and the mass fraction of Cr₂O₃ was 0.1 wt%.

(2) The ferrite magnetic powder obtained in step (1) was heated to 85 °C while stirring, acetic acid with a concentration of 15% was added, and the resulting mixture continued to be stirred for 10 min to obtain a first mixed powder; the first mixed powder was heated to 100 °C while stirring, octyl stearate was added, and the resulting mixture continued to be stirred for 30 min to obtain a second mixed powder; the temperature of the second mixed powder was adjusted to 90 °C, polyamide wax and a binder were added, and the resulting mixture continued to be mixed for 20 min to obtain a final mixed material.

Based on the mass of the mixed material being 100%, the mass fraction of the ferrite magnetic powder was 94 wt%, the mass fraction of the acetic acid with a concentration of 15% was 0.4 wt%, the mass fraction of the octyl stearate was 0.3 wt%, the mass fraction of the binder was 5 wt%, and the mass fraction of the polyamide wax was 0.3 wt%.

Based on the mass of the binder being 100%, in the binder, the mass fraction of paraffin wax was 55 wt%, the mass fraction of stearic acid wax was 15 wt%, the mass fraction of high-density polyethylene was 15 wt%, and the mass fraction of low-density polyethylene was 15 wt%.

(3) The mixed material obtained in step (2) was kneaded at 120 °C for 2 h and granulated to obtain a permanent ferrite magnet granular material with an average particle diameter of 7 mm.

(4) The permanent ferrite magnet granular material obtained in step (3) was subjected to injection molding in a tile-shaped molding cavity at a temperature of 140 °C and under a pressure of 180 bar and naturally cooled to obtain a green body.

(5) The green body obtained in step (4) was subjected to solvent debinding by immersing the green body in kerosene at a temperature of 50 °C for 8 h and subjected to thermal debinding by heating the green body at a rate of 12 °C/min to 800 °C and holding the green body at 800 °C for 6 h to obtain a debound green body.

(6) The debound green body obtained in step (5) was sintered in an air atmosphere at a temperature of 1240 °C for 6 h to obtain the tile ferrite magnet.

### Example 4

The present application provides a method for preparing a tile ferrite magnet. The preparation method includes the following steps.
(1) A permanent ferrite magnet coarse powder with an average particle diameter of 5 µm was mixed with an additive with an average particle diameter of 1 µm, and the resulting mixture was subjected to wet ball milling and dried to obtain a ferrite magnetic powder with an average particle diameter of 0.9 µm.

The permanent ferrite magnet coarse powder had a chemical formula of Sr_{0.25}Ca_{0.3}La_{0.45}Fe_{11.3}Co_{0.32}O₁₉. The additive included SiO₂, CaCO₃ and H₃BO₃. Based on the total mass of the permanent ferrite magnet coarse powder and the additive being 100%, the mass fraction of SiO₂ was 0.5 wt%, the mass fraction of CaCO₃ was 1.5 wt%, and the mass fraction of H₃BO₃ was 0.4 wt%.

(2) The ferrite magnetic powder obtained in step (1) was heated to 80 °C while stirring, phosphoric acid with a concentration of 15% was added, and the resulting mixture continued to be stirred for 15 min to obtain a first mixed powder; the first mixed powder was heated to 90 °C while stirring, stearic acid was added, and the resulting mixture continued to be stirred for 40 min to obtain a second mixed powder; the temperature of the second mixed powder was adjusted to 80 °C, polyamide wax and a binder were added, and the resulting mixture continued to be mixed for 40 min to obtain a final mixed material.

Based on the mass of the mixed material being 100%, the mass fraction of the ferrite magnetic powder was 93 wt%, the mass fraction of the phosphoric acid with a concentration of 15% was 0.5 wt%, the mass fraction of the stearic acid was 0.5 wt%, the mass fraction of the binder was 5.6 wt%, and the mass fraction of the polyamide wax was 0.4 wt%.

Based on the mass of the binder being 100%, in the binder, the mass fraction of paraffin wax was 60 wt%, the mass fraction of stearic acid wax was 10 wt%, the mass fraction of high-density polyethylene was 15 wt%, and the mass fraction of low-density polyethylene was 15 wt%.

(3) The mixed material obtained in step (2) was kneaded at 100 °C for 3 h and granulated to obtain a permanent ferrite magnet granular material with an average particle diameter of 8 mm.

(4) The permanent ferrite magnet granular material obtained in step (3) was subjected to injection molding in a tile-shaped molding cavity at a temperature of 100 °C and under a pressure of 200 bar and naturally cooled to obtain a green body.

(5) The green body obtained in step (4) was subjected to solvent debinding by immersing the green body in kerosene at a temperature of 40 °C for 7 h and subjected to thermal debinding by heating the green body at a rate of 10 °C/min to 400 °C and holding the green body at 400 °C for 6 h to obtain a debound green body.

(6) The debound green body obtained in step (5) was sintered in an air atmosphere at a temperature of 1150 °C for 6 h to obtain the tile ferrite magnet.

### Example 5

The present application provides a method for preparing a tile ferrite magnet. The preparation method includes the following steps.
(1) A permanent ferrite magnet coarse powder with an average particle diameter of 5 µm was mixed with an additive with an average particle diameter of 2 µm, and the resulting mixture was subjected to wet ball milling and dried to obtain a ferrite magnetic powder with an average particle diameter of 1 µm.

The permanent ferrite magnet coarse powder had a chemical formula of Sr_{0.20}Ca_{0.28}La_{0.52}Fe_{11.4}Co_{0.30}O₁₉. The additive included SiO₂, CaCO₃, H₃BO₃, ZnO and Al₂O₃. Based on the total mass of the permanent ferrite magnet coarse powder and the additive being 100%, the mass fraction of SiO₂ was 0.6 wt%, the mass fraction of CaCO₃ was 1.3 wt%, the mass fraction of H₃BO₃ was 0.3 wt%, the mass fraction of ZnO was 0.2 wt%, and the mass fraction of Al₂O₃ was 0.4 wt%.

(2) The ferrite magnetic powder obtained in step (1) was heated to 120 °C while stirring, citric acid with a concentration of 15% was added, and the resulting mixture continued to be stirred for 5 min to obtain a first mixed powder; the first mixed powder was heated to 130 °C while stirring, butyl stearate was added, and the resulting mixture continued to be stirred for 20 min to obtain a second mixed powder; the temperature of the second mixed powder was adjusted to 100 °C, polyamide wax and a binder were added, and the resulting mixture continued to be mixed for 20 min to obtain a final mixed material.

Based on the mass of the mixed material being 100%, the mass fraction of the ferrite magnetic powder was 91 wt%, the mass fraction of the citric acid with a concentration of 15% was 0.8 wt%, the mass fraction of the butyl stearate was 0.4 wt%, the mass fraction of the binder was 7.3 wt%, and the mass fraction of the polyamide wax was 0.5 wt%.

Based on the mass of the binder being 100%, in the binder, the mass fraction of paraffin wax was 60 wt%, the mass fraction of stearic acid wax was 15 wt%, the mass fraction of high-density polyethylene was 10 wt%, and the mass fraction of low-density polyethylene was 10 wt%.

(3) The mixed material obtained in step (2) was kneaded at 150 °C for 1 h and granulated to obtain a permanent ferrite magnet granular material with an average particle diameter of 6 mm.

(4) The permanent ferrite magnet granular material obtained in step (3) was subjected to injection molding in a tile-shaped molding cavity at a temperature of 150 °C and under a pressure of 75 bar and naturally cooled to obtain a green body.

(5) The green body obtained in step (4) was subjected to solvent debinding by immersing the green body in kerosene at a temperature of 60 °C for 5 h and subjected to thermal debinding by heating the green body at a rate of 15 °C/min to 800 °C and holding the green body at 800 °C for 4 h to obtain a debound green body.

(6) The debound green body obtained in step (5) was sintered in an air atmosphere at a temperature of 1200 °C for 4 h to obtain the tile ferrite magnet.

### Example 6

The present application provides a method for preparing a tile ferrite magnet. The preparation method in this example is identical to the preparation method in Example 1 except that the injection molding in step (4) was performed at a temperature of 80 °C.

### Example 7

The present application provides a method for preparing a tile ferrite magnet. The preparation method in this example is identical to the preparation method in Example 1 except that the injection molding in step (4) was performed at a temperature of 180 °C.

### Example 8

The present application provides a method for preparing a tile ferrite magnet. The preparation method in this example is identical to the preparation method in Example 1 except that in step (5), the immersion of the green body obtained in step (4) in kerosene at a temperature of 50 °C for 8 h for solvent debinding was omitted.

### Example 9

The present application provides a method for preparing a tile ferrite magnet. The preparation method in this example is identical to the preparation method in Example 1 except that in step (5), the thermal debinding by heating the green body at a rate of 12 °C/min to 700 °C and holding the green body at 700 °C for 6 h was replaced with thermal debinding by directly holding the green body at 400-800 °C for 4-6 h, without a temperature rising procedure.

### Comparative Example 1

The present application provides a method for preparing a tile ferrite magnet. The preparation method in this comparative example is identical to the preparation method in Example 1 except that the sintering in step (6) was performed at a temperature of 1050 °C.

### Comparative Example 2

The present application provides a method for preparing a tile ferrite magnet. The preparation method in this comparative example is identical to the preparation method in Example 1 except that the sintering in step (6) was performed at a temperature of 1300 °C.

### Comparative Example 3

The present application provides a method for preparing a tile ferrite magnet. The preparation method in this comparative example is identical to the preparation method in Example 1 except that step (5) and step (6) were omitted.

### Comparative Example 4

The present application provides a method for preparing a tile ferrite magnet. The preparation method includes the following steps: a mixed material of a permanent ferrite magnet coarse powder with an average particle diameter of 0.8-1.2 µm and a ball-milling additive was mixed by ball milling and then subjected to molding in a magnetic field, sintering and grinding to obtain a tile ferrite magnet having the same size specification as the tile ferrite magnet prepared by Example 1.

The permanent ferrite magnet coarse powder was Sr_{0.15}Ca_{0.35}La_{0.50}Fe_{11.4}Co_{0.26}O₁₉. The ball-milling additive was a mixture of SiO₂, CaCO₃, H₃BO₃ and Cr₂O₃. In the mixed material, the mass fraction of SiO₂ was 0.4 wt%, the mass fraction of CaCO₃ was 1.8 wt%, the mass fraction of H₃BO₃ was 0.5 wt%, and the mass fraction of Cr₂O₃ was 0.4 wt%.

The tile ferrite magnets prepared by Examples 1 to 9 and Comparative Examples 1 to 4 were tested for center surface magnetic field, magnetic energy product, density, anti-compressive strength, yield, and material utilization. The obtained results are shown in Table 1.

The test method for the center surface magnetic field is as follows: the center surface magnetic field of the tile magnet refers to the surface magnetic flux density measured at the center position of the inner arc of the finished tile magnet using a general-purpose Gauss meter.

The test method for the magnetic energy product is as follows: a square sample is ground from the middle part of the tile magnet, and the magnetic energy product of the tile magnet is obtained by measuring the demagnetization curve of the obtained magnet using a BH comprehensive tester.

The test method for the density is as follows: the density of the tile magnet is measured by the displacement method using a kerosene density meter.

The test method for the anti-compressive strength is as follows: the anti-compressive strength of the tile magnet is measured by testing the finished tile magnet using a universal testing machine.

The test method for the yield is as follows: the product yield of the tile magnet refers to the number of qualified products divided by the total number of the batch products *100%.

The test method for the material utilization is as follows: the material utilization of the tile magnet refers to the mass of the finished tile magnet divided by the mass of the corresponding magnetic powder in the molded green tile magnet *100%.

**Table 1**

| | Center surface magnetic field(Gs) | Magnetic energy product (MGOe) | Density (g/cm³) | Anti-compressive strength (N) | Yield (%) | Material utilization (%) |
|---|---|---|---|---|---|---|
| Example 1 | 665 | 4.98 | 5.06 | 487 | 98 | 92 |
| Example 2 | 678 | 5.12 | 5.10 | 598 | 97 | 93 |
| Example 3 | 646 | 4.87 | 4.99 | 650 | 99 | 91 |
| Example 4 | 652 | 4.92 | 5.04 | 493 | 97 | 93 |
| Example 5 | 658 | 5.03 | 5.07 | 536 | 98 | 92 |
| Example 6 | 595 | 4.83 | 4.95 | 462 | 94 | 87 |
| Example 7 | 613 | 4.58 | 4.89 | 449 | 89 | 91 |
| Example 8 | 635 | 4.85 | 4.97 | 483 | 90 | 92 |
| Example 9 | 623 | 4.65 | 4.93 | 438 | 91 | 91 |
| Comparativ e Example 1 | 598 | 4.38 | 4.85 | 408 | 85 | 85 |
| Comparativ e Example 2 | 603 | 4.52 | 4.95 | 418 | 88 | 89 |
| Comparativ e Example 3 | 287 | 2.24 | 3.10 | 430 | 100 | 97 |
| Comparativ e Example 4 | 652 | 4.95 | 5.08 | 180 | 15 | 39 |

As can be seen from Table 1:
(1) The tile magnets prepared by Examples 1 to 5 all exhibit excellent magnetic properties: the center surface magnetic field is 630-700 Gs, the magnetic energy product reaches 4.5-5.2 MGOe, the density is 4.8-5.2 g/cm³, and the anti-compressive strength is 480-680 N.
(2) As can be seen from the comparison of Example 1 with Examples 6 and 7, the temperature of injection molding in step (4) of the present application affects the performance and strength of the tile ferrite magnet. When the temperature of injection molding is too low, the fluidity of the magnetic powder becomes poor, resulting in poor orientation during injection molding. The prepared tile ferrite magnet is insufficiently molded and has poor surface quality, thereby leading to deteriorated performance and decreased anti-compressive strength of the resulting tile ferrite magnet. When the temperature of injection molding is too high, the binder may partially undergo thermal decomposition, and thermal damage or scorching is likely to occur, thereby affecting the performance and anti-compressive strength of the tile ferrite magnet obtained by injection molding.
(3) As can be seen from the comparison of Example 1 with Example 8, solvent debinding in the present application affects the performance of the tile ferrite magnet. The reason for the above is as follows: In the present application, most of the paraffin wax is removed by prolonged immersion in kerosene, which prevents excessively large or uneven pores caused by wax volatilization during sintering, thereby improving the strength of the product. The resulting product exhibits uniform porosity and high compactness, and the debound green body has a high density. Therefore, the overall material utilization and yield are improved.
(4) As can be seen from the comparison of Example 1 with Example 9, the temperature rising procedure in the thermal debinding step of the present application affects the performance of the tile ferrite magnet. When the temperature rising procedure in the thermal debinding step is omitted and the temperature-holding treatment is directly performed, the performance of the tile ferrite magnet is decreased. The reason for the above is as follows: During the thermal debinding step of the present application, by adopting a slow heating procedure from low temperature, the organic binders other than the paraffin wax are melt slowly and gradually exude to the surface of the green body obtained by injection molding, which avoids the formation of numerous irregular pores due to the gasification of these organic substances during subsequent sintering, thereby improving the strength of the final product and ensuring the compactness of the product. As a result, a high-density tile ferrite magnet is ultimately obtained.
(5) As can be seen from the comparison of Example 1 with Comparative Examples 1 and 2, the temperature of sintering in step (6) of the present application affects the performance of the tile ferrite magnet. When the temperature of sintering is too low, the performance of the tile ferrite magnet is decreased, because when the sintering temperature is excessively low, the prepared tile ferrite magnet has an unstable structure, poor dimension stability, and poor surface quality. When the temperature of sintering is too high, the performance of the tile ferrite magnet is decreased, because when the sintering temperature is excessively high, the prepared tile ferrite magnet may undergo thermal deformation, making it difficult to obtain a tile ferrite magnet that meets dimension requirements; the excessively high sintering temperature may also cause surface melting or scorching, leading to surface quality issues such as bubbles, voids or burn marks.
(6) As can be seen from the comparison of Example 1 with Comparative Example 3, step (5) and step (6) of the preparation method in the present application affect the performance of the tile ferrite magnet. In the present application, most of the paraffin wax is first removed by prolonged immersion in kerosene, which prevents excessively large or uneven pores caused by wax volatilization during sintering, thereby improving the strength of the product. The resulting product exhibits uniform porosity and high compactness, and the debound green body has a high density. Then, during the thermal debinding step, by adopting a slow heating procedure from low temperature, the organic binders other than the paraffin wax are melt slowly and gradually exude to the surface of the green body obtained by injection molding, which avoids the formation of numerous irregular pores due to the gasification of these organic substances during subsequent sintering, thereby improving the strength of the final product and ensuring the compactness of the product. As a result, a high-density tile ferrite magnet is ultimately obtained.
(7) As can be seen from the comparison of Example 1 with Comparative Example 4, the properties of the tile ferrite magnet prepared by the preparation method described in the present application are significantly higher than the properties of existing injection-molded permanent ferrite magnets.

In summary, the ultra-thin tile magnet with a large arc angle prepared by the preparation method described in the present application exhibits excellent magnetic properties: the center surface magnetic field is 630-700 Gs, the magnetic energy product reaches 4.5-5.2 MGOe, the density is 4.8-5.2 g/cm³, and the anti-compressive strength is 480-680 N, which are significantly higher than those of existing injection-molded permanent ferrite magnets. Moreover, the ultra-thin tile magnet with a large arc angle prepared by the preparation method described in the present application has few microcracks and requires substantially no post-grinding processing, which not only reduces the risk of stress damage generated during processing but also improves the yield and material utilization: the yield is not less than 95%, and the material utilization is not less than 90%, thereby reducing production costs and meeting the requirements for mass production.

The preceding are embodiments of the present application and are not intended to limit the scope of the present application. It should be understood by those skilled in the art that any changes or substitutions easily conceivable by those skilled in the art within the technical scope disclosed in the present application fall within the scope of the present application.

## Claims

1. A preparation method for a tile ferrite magnet, comprising:
subjecting a mixed material of a ferrite magnetic powder and a binder to injection molding and sintering to obtain the tile ferrite magnet;
wherein the sintering is performed at a temperature of 1150-1240 °C.

2. The preparation method according to claim 1, wherein the mixed material further comprises a surface modifier, a coupling agent, and a flow aid.

3. The preparation method according to claim 2, wherein based on a mass of the mixed material being 100%, a mass fraction of the ferrite magnetic powder is 88.3-94.3 wt%, a mass fraction of the surface modifier is 0.1-0.9 wt%, a mass fraction of the coupling agent is 0.3-1.0 wt%, a mass fraction of the binder is 5-9 wt%, and a mass fraction of the flow aid is 0.3-0.8 wt%.

4. The preparation method according to claim 2 or 3, wherein the surface modifier comprises any one or a combination of at least two of phosphoric acid, oxalic acid, acetic acid or citric acid; and
optionally, the surface modifier has a concentration of 10-20 wt%.

5. The preparation method according to any one of claims 2 to 4, wherein the coupling agent comprises stearic acid and/or an ester derivative of stearic acid; and
optionally, the ester derivative of stearic acid comprises butyl stearate and/or octyl stearate.

6. The preparation method according to any one of claims 2 to 5, wherein the flow aid comprises polyamide wax;
optionally, the binder comprises paraffin wax and/or microcrystalline wax, stearic acid wax, high-density polyethylene, and low-density polyethylene; and
optionally, based on a mass of the binder being 100%, a mass fraction of the paraffin wax and/or microcrystalline wax is 50-70 wt%, a mass fraction of the stearic acid wax is 10-20 wt%, a mass fraction of the high-density polyethylene is 10-15 wt%, and a mass fraction of the low-density polyethylene is 10-15 wt%.

7. The preparation method according to any one of claims 2 to 6, wherein the mixed material is prepared by the following method: mixing the ferrite magnetic powder, the surface modifier, the coupling agent, and the binder to obtain the mixed material;
wherein optionally, the mixing comprises: subjecting the ferrite magnetic powder and the surface modifier to first heating and mixing to obtain a first mixed powder; adding the coupling agent, and performing second heating and mixing to obtain a second mixed powder; and adding the flow aid and the binder, and performing third heating and mixing to obtain the mixed material;
optionally, the first heating and mixing comprises: heating the ferrite magnetic powder to 80-120 °C while stirring, adding the surface modifier, and continuing stirring for 5-15 min to obtain the first mixed powder;
optionally, the second heating and mixing comprises: heating the first mixed powder to 90-130 °C while stirring, adding the coupling agent, and continuing stirring for 20-40 min to obtain the second mixed powder;
optionally, the third heating and mixing comprises: adjusting a temperature of the second mixed powder to 80-100 °C, adding the flow aid and the binder, and continuing mixing for 20-40 min to obtain the mixed material;
optionally, the first mixed powder has a moisture content of no more than 600 ppm; and
optionally, the second mixed powder has a moisture content of no more than 900 ppm.

8. The preparation method according to any one of claims 1 to 7, wherein the ferrite magnetic powder is prepared by the following method: mixing a permanent ferrite magnet coarse powder having an average particle diameter of 4-6 µm with an additive, performing wet ball milling, and drying to obtain the ferrite magnetic powder with an average particle diameter of 0.8-1.2 µm;
wherein optionally, the permanent ferrite magnet coarse powder has a chemical formula of A_{1-x-y}CaₓLa_{y}Fe_{2n-z}Co_{z}O₁₉, wherein A comprises Sr or any one or a combination of at least two of Sr or Ba, 0.25 ≤ x ≤ 0.45, 0.35 ≤ y ≤ 0.55, 0.25 ≤ z ≤ 0.40, 0.6 ≤ z/y ≤ 0.9, and 5.1 ≤ n ≤ 5.6;
optionally, the additive comprises SiO₂, CaCO₃ and H₃BO₃;
optionally, the additive further comprises Al₂O₃, Cr₂O₃, ZnO and SrCO₃;
optionally, the additive has an average particle diameter of no more than 5 µm; and
optionally, based on a total mass of the permanent ferrite magnet coarse powder and the additive being 100%, a mass fraction of SiO₂ is 0.05-2.0 wt%, a mass fraction of CaCO₃ is 0.4-2.0 wt%, a mass fraction of Al₂O₃ is 0-2.0 wt%, a mass fraction of Cr₂O₃ is 0-1.5 wt%, a mass fraction of ZnO is 0.1-0.6 wt%, a mass fraction of SrCO₃ is 0.1-1.0 wt%, and a mass fraction of H₃BO₃ is 0.1-0.8 wt%.

9. The preparation method according to any one of claims 1 to 3, comprising: performing kneading and granulation sequentially before the injection molding;
wherein optionally, the kneading is performed at a temperature of 100-150 °C for 1-3 h; and
optionally, the mixed material obtained after the granulation has an average particle diameter of 6-8 mm.

10. The preparation method according to any one of claims 1 to 9, wherein the injection molding is performed at a temperature of 100-150 °C; and
optionally, the injection molding is performed under a pressure of 75-200 bar;
optionally, the injection molding is performed in a tile-shaped molding cavity equipped with a magnetic field; and
optionally, natural cooling is further performed between the injection molding and the sintering.

11. The preparation method according to any one of claims 1 to 10, further comprising debinding performed between the injection molding and the sintering;
wherein optionally, the debinding comprises solvent debinding and thermal debinding sequentially performed;
optionally, the solvent debinding comprises: immersing a green body obtained by the injection molding in kerosene;
optionally, the immersing is performed at a temperature of 40-60 °C for 5-8 h;
optionally, the thermal debinding comprises heating and temperature holding sequentially performed;
optionally, the heating is performed at a heating rate of 10-15 °C/min, and an end point temperature for the heating is 400-800 °C; and
optionally, the temperature holding is performed for 4-6 h.

12. The preparation method according to any one of claims 1 to 11, wherein the sintering is performed for 2-6 h; and
the sintering is performed in an air atmosphere.

13. The preparation method according to any one of claims 1 to 12, comprising:
(1) mixing a permanent ferrite magnet coarse powder having an average particle diameter of 4-6 µm with an additive with an average particle diameter of no more than 5 µm, performing wet ball milling, and drying to obtain the ferrite magnetic powder with an average particle diameter of 0.8-1.2 µm;
wherein the permanent ferrite magnet coarse powder has a chemical formula of A_{1-x-y}CaₓLa_{y}Fe_{2n-z}Co_{z}O₁₉, wherein A comprises Sr or any one or a combination of at least two of Sr or Ba, 0.25 ≤ x ≤ 0.45, 0.35 ≤ y ≤ 0.55, 0.25 ≤ z ≤ 0.40, 0.6 ≤ z/y ≤ 0.9, and 5.1 ≤ n ≤ 5.6;
and
based on a total mass of the permanent ferrite magnet coarse powder and the additive being 100%, a mass fraction of SiO₂ is 0.05-2.0 wt%, a mass fraction of CaCO₃ is 0.4-2.0 wt%, a mass fraction of Al₂O₃ is 0-2.0 wt%, a mass fraction of Cr₂O₃ is 0-1.5 wt%, a mass fraction of ZnO is 0-0.6 wt%, a mass fraction of SrCO₃ is 0.1-1.0 wt%, and a mass fraction of H₃BO₃ is 0-0.8 wt%;
(2) heating the ferrite magnetic powder obtained in (1) to 80-120 °C while stirring, adding a surface modifier, and continuing stirring for 5-15 min to obtain a first mixed powder; heating the first mixed powder to 90-130 °C while stirring, adding a coupling agent, and continuing stirring for 20-40 min to obtain a second mixed powder; adjusting a temperature of the second mixed powder to 80-100 °C, adding a flow aid and the binder, and continuing mixing for 20-40 min to obtain a final mixed material;
wherein based on a mass of the mixed material being 100%, a mass fraction of the ferrite magnetic powder is 88.3-94.3 wt%, a mass fraction of the surface modifier is 0.1-0.9 wt%, a mass fraction of the coupling agent is 0.3-1.0 wt%, a mass fraction of the binder is 5-9 wt%, and a mass fraction of the flow aid is 0.3-0.8 wt%; and
based on a mass of the binder being 100%, a mass fraction of paraffin wax and/or microcrystalline wax is 50-70 wt%, a mass fraction of stearic acid wax is 10-20 wt%, a mass fraction of high-density polyethylene is 10-15 wt%, and a mass fraction of low-density polyethylene is 10-15 wt%;
(3) kneading the mixed material obtained in (2) at 100-150 °C for 1-3 h and granulating to obtain a permanent ferrite magnet granular material with an average particle diameter of 6-8 mm;
(4) subjecting the permanent ferrite magnet granular material obtained in (3) to injection molding in a tile-shaped molding cavity at a temperature of 100-150 °C and under a pressure of 75-200 bar, and performing natural cooling to obtain a green body;
(5) subjecting the green body obtained in (4) to solvent debinding by immersing the green body in kerosene at a temperature of 40-60 °C for 5-8 h, and subjecting the green body to thermal debinding by heating the green body at a rate of 10-15 °C/min to a temperature of 400-800 °C and holding the green body at the temperature for 4-6 h to obtain a debound green body; and
(6) sintering the debound green body obtained in (5) in an air atmosphere at a temperature of 1150-1240 °C for 2-6 h to obtain the tile ferrite magnet.

14. A tile ferrite magnet, wherein the tile ferrite magnet is prepared by the preparation method according to any one of claims 1 to 13.

15. The tile ferrite magnet according to claim 14, wherein the tile ferrite magnet has an arc angle greater than 150° and a thickness not greater than 2.0 mm; and
optionally, the tile ferrite magnet has a magnetic energy product of 4.5-5.2 MGOe.
